# EUROPÄISCHE PATENTSCHRIFT

(11) **EP 1 609 747 B1**
(45) Veröffentlichungstag und Bekanntmachung des Hinweises auf die Patenterteilung: **14.06.2006**
(21) Anmeldenummer: 04014085.7
(22) Anmeldetag: 16.06.2004
(51) Int. Cl.: B65G 47/71

(54) **Vorrichtung zum Ausschleusen von auf einer zuführenden Kastenbahn ankommenden Getränkekästen**
Device for redirecting crates conveyed on a first conveyor
Dispositif pour la redirection de caisses transportées sur un premier convoyeur

(43) Veröffentlichungstag der Anmeldung: 28.12.2005
(73) Patentinhaber: Recop Electronic GmbH, 34123 Kassel-Waldau (DE)
(72) Erfinder: Oppermann, Knut, 34260 Kaufungen (DE)
(74) Vertreter: WALTHER, WALTHER & HINZ Patentanwälte - European Patent Attorneys

(56) Entgegenhaltungen:
- DE-A- 4 134 009
- US-A- 5 042 636
- US-A- 5 048 665

## Beschreibung

Die Erfindung betrifft eine Vorrichtung zum Ausschleusen von auf einer zuführenden Kastenbahn ankommenden Getränkekästen auf mindestens zwei abgehende Kastenbahnen.

Eine Vorrichtung zum Ausschleusen der eingangs genannten Art ist aus dem Stand der Technik unter dem Begriff "Impulsausschleuser" bekannt. Ein solcher Impulsausschleuser zeichnet sich durch mindestens einen Pusher aus, wobei durch diesen Pusher ein Getränkekasten von einer zuführenden Kastenbahn auf eine abführende Kastenbahn überführt wird. Das heißt, dass durch die vorgenannte Ausschleusvorrichtung ankommende Kästen in Bezug auf ihre Art oder Hersteller bezogen sortiert werden.

Verteilvorrichtungen sind z.B. aus US5042636 oder DE4134009 bekannt.

Die herkömmlichen Flaschenkästen aus Kunststoff sind mit Glasflaschen bestückt. Diese Glasflaschen haben ein bestimmtes Gewicht, was dem Flaschenkasten ebenfalls ein bestimmtes Gewicht verleiht. Wird ein solcher Flaschenkasten von einem Pusher angestoßen, dann erfolgt das Ausschleusen des Flaschenkastens von der einen zuführenden Kastenbahn auf die abführende Kastenbahn im Wesentlichen ohne dass der Flaschenkasten sich dreht oder gar umfällt.

In neuerer Zeit werden vielfach sogenannte PET-Flaschen als Mehrwegflaschen eingesetzt. Ein solcher mit PET-Flaschen ausgestatteter Flaschenkasten besitzt nur noch ein sehr geringes Gewicht. Wird ein solcher mit PET-Flaschen bestückter Flaschenkasten durch einen Pusher angestoßen, dann besteht die hohe Gefahr, dass sich dieser Flaschenkasten dreht. Der abführenden Kastenbahn nachgeordnet sind sogenannte Auspacker. Ein solcher Auspacker umfasst einen dreidimensional beweglichen Arm mit einer endseitig angeordneten Auspackeinrichtung, wobei die Auspackeinrichtung eine Anzahl von Packtulpen umfasst, die meistens der Anzahl der in einem Flaschenkasten einsitzenden Flaschen entspricht. Voraussetzung für das einwandfreie Arbeiten eines solchen Auspackers ist, dass die ankommenden Flaschenkästen immer in gleicher Weise ausgerichtet sind. Nicht gewünscht ist demzufolge, wenn der Flaschenkasten in verschwenkter Form dem Auspacker zugeführt wird. Ein solches kann allerdings - wie zuvor bereits beschrieben - nicht gänzlich ausgeschlossen werden, wenn derartige mit PET-Flaschen bestückte Flaschenkästen von einem Pusher von der ankommenden Kastenbahn auf die abgehende Kastenbahn überführt werden. Darüber hinaus gibt es seit Neuestem auch sogenannte "Achterkästen"; dies sind mit acht Flaschen bestückte Kästen, die sich insbesondere dadurch auszeichnen, dass diese Kästen ein großes Länge- zu Breite-Verhältnis aufweisen. Bei solchen Flaschenkästen besteht insbesondere die Gefahr, dass sich diese bei Anstoßen durch einen Pusher drehen oder gar umgestoßen werden.

Der Erfindung liegt daher die Aufgabe zugrunde, eine Ausschleusvorrichtung der eingangs genannten Art zu schaffen, mit der auch mit PET-Flaschen bestückte Flaschenkästen, also solche Flaschenkästen, die nur ein geringes Gesamtgewicht aufweisen, ausgeschleust werden können, ohne dass weder die Gefahr besteht, dass derartige Flaschenkästen während des Ausschleusvorganges gedreht oder auch umgestoßen werden können. Gleiches soll auch gelten für Kästen, die ein größeres Länge zu Breite Verhältnis aufweisen.

Die Aufgabe wird erfindungsgemäß dadurch gelöst, dass die Ausschleusvorrichtung von der zuführenden Kastenbahn zu mindestens einer abführenden Kastenbahn bogenförmig verläuft, wobei der bogenförmige Verlauf von der einen äußeren Seite der zuführenden Kastenbahn zur inneren Seite der abführenden Kastenbahn erfolgt, also der Seite der abführenden Kastenbahn, die der einen zuführenden Kastenbahn am nächsten liegt, wobei die Ausschleusvorrichtung ein Gestell umfasst, wobei an dem Gestell mehrere hintereinander angeordnete, einzeln in vertikaler Richtung betätigbare Abweiser mit Abweisschild vorgesehen sind, wobei die Abweisschilder nacheinander entsprechend dem Lauf des auszuschleusenden Kastens in vertikaler Richtung in den Weg des Kastens verschieblich sind, um unmittelbar nach Passieren des Kastens wieder in die Ausgangsposition zurückgefahren zu werden.

Durch die erfindungsgemäße Ausschleusvorrichtung werden die einzelnen Kästen nicht mehr unter Beaufschlagung durch einen Stoßimpuls ausgeschleust, sondern durch quasi ein bewegliches Geländer aus Abweisschildern von der einen zuführenden Kastenbahn auf die entsprechende abführende Kastenbahn überführt. Das heißt, der Ausschleusvorgang erfolgt weich und kontinuierlich, so dass ein Drehen des Flaschenkastens während des Ausschleusvorgangs oder auch gar ein Umfallen des Flaschenkastens vermieden wird.

Vorteilhafte Merkmale der Erfindung ergeben sich aus den Unteransprüchen.

Vorteilhaft befindet sich die zuführende Kastenbahn in einer Achse mit der einen abgehenden Kastenbahn. Hieraus wird deutlich, dass dann, wenn ein Teil der Kästen auf unmittelbarem Wege weitergeleitet werden kann, eine zweite Ausschleusvorrichtung entbehrlich ist. Vorteilhaft ist weiterhin, wenn die beiden Kastenbahnen getrennt voneinander verlaufen, also insbesondere beabstandet zueinander sind, eine Zuführung im Sinne einer Zuordnung der auszuschleusenden Kästen zu der jeweiligen Kastenbahn definiert erfolgen zu lassen.

Nach einem besonders vorteilhaften Merkmal ist vorgesehen, dass die Abweiser unmittelbar vor dem ankommenden Kasten jeweils in den Weg des auszuschleusenden Kastens verfahrbar sind, um dann unmittelbar nach Passieren des Kastens wieder in die Ausgangsposition zurückgefahren zu werden. Dies vor folgendem Hintergrund:

Es werden kontinuierlich Kästen auf der zuführenden Kastenbahn angeliefert; diese Kästen sind in ihrer Art unterschiedlich, wobei zwei Kästen gleicher Art aufeinanderfolgen können oder auch abwechselnd Kästen der einen oder anderen Art auf der zuführenden Kastenbahn ankommen. Im Falle, dass Kästen unterschiedlicher Art wechselweise ankommen, d. h., dass der eine Kasten auf die eine andere Kastenbahn überführt werden muss, während der andere ankommende Kasten nicht abgelenkt werden muss, ist es erforderlich, dass unmittelbar nach Passieren des einen auszuschleusenden Kastens auf die eine andere Kastenbahn der nachfolgende Kasten nicht ausgeschleust wird, mithin die Ausschleuser sich nicht im Wege dieses nicht auszuschleusenden Kastens befinden. Andererseits gilt, dass, wenn mehrere ausschwenkende Kästen hintereinander ankommen, die Abweisschilder in ihrer unteren, also der Ausschleusstellung verbleiben.

Vorteilhaft sind die Abweisschilder von oben nach unten kommend in den Weg des auszuschleusenden Kastens verfahrbar. Die Anordnung der Ausschleusvorrichtung mit den einzelnen Abweisern über den Kastenbahnen hat den Vorteil, dass diese nicht verschmutzen können. Dies im Gegensatz dazu, wenn die Ausschleusvorrichtung unter der Kastenbahn angeordnet wäre, was theoretisch auch vorstellbar ist.

Des Weiteren ist vorgesehen, dass der Abweiser einen insbesondere pneumatisch betätigbaren Kolben-Zylinderantrieb aufweist. Pneumatisch betätigbare Kolben-Zylinderantriebe sind preisgünstig und besitzen eine kurze Ansprechzeit. Ein jeder der Abweiser weist endseitig das Abweisschild auf, wobei ein solches Abweisschild jeweils eine solche Größe aufweist, dass dieses mit dem Abweisschild des benachbarten Abweisers gerade nicht in Berührung kommt. Das heißt, dass für den auszuschleusenden Kasten durch die Abweisschilder durch deren wellenförmige Bewegung eine Art mitlaufendes Geländer erzeugt wird, an dem entlang der Kasten ausgeschleust wird.

Die Ausschleusvorrichtung selbst besitzt eine bogenförmig verlaufende über der Kastenbahn angeordnete Gestellschiene, an der die einzelnen Abweiser dicht an dicht angeordnet sind, so dass sich im Ergebnis ein bogenförmiges Geländer, beginnend von der einen äußeren Seite der zuführenden Kastenbahn auf die eine innere Seite der abführenden Kastenbahn ergibt, so dass für den Ausschleusvorgang immer die volle Breite der zuführenden bzw. abführenden Kastenbahn zur Verfügung steht.

Um das Überleiten von der einen Kastenbahn auf die andere Kastenbahn im Bereich der Ausschleusvorrichtung zu gewährleisten, bilden die beiden abführenden Kastenbahnen im Bereich der Ausschleusvorrichtung, also unter der Ausschleusvorrichtung einen Tisch, umfassend zwei getrennte Kastenbahnen, die jedoch unmittelbar aneinander anliegen. Das heißt, die Kastenbahnen im Bereich der Ausschleusvorrichtung sind gegebenenfalls breiter als die eigentlichen abführenden Kastenbahnen nach der Ausschleusvorrichtung, die beabstandet zueinander sein können.

Im Einzelnen ist in Bezug auf den Abweiser vorgesehen, dass der einzelne Abweiser einen Arm aufweist, wobei der Arm in horizontaler Richtung verstellbar durch die Gestellschiene aufnehmbar ist. Hierzu besitzt der Arm im Einzelnen ein Langloch, wodurch gewährleistet ist, dass der Arm an der Gestellschiene entsprechend der Ausschleusrichtung in seiner Stellung relativ zu der abführenden Kastenbahn eingestellt bzw. justiert werden kann. Die Kastenbahnen selbst sind als aktive Förder- oder Transportbahnen ausgebildet, d. h., dass durch diese Bahnen die Kästen selbstständig transportiert werden.

Anhand der Zeichnungen wird die Erfindung nachstehend beispielhaft näher erläutert:
- Figur 1: zeigt die Vorrichtung zum Ausschleusen in einer Ansicht von oben;
- Figur 2: zeigt eine Ansicht gemäß der Linie II-II aus Fig. 1;
- Figur 3: zeigt den Abweiser in vergrößerter Darstellung.

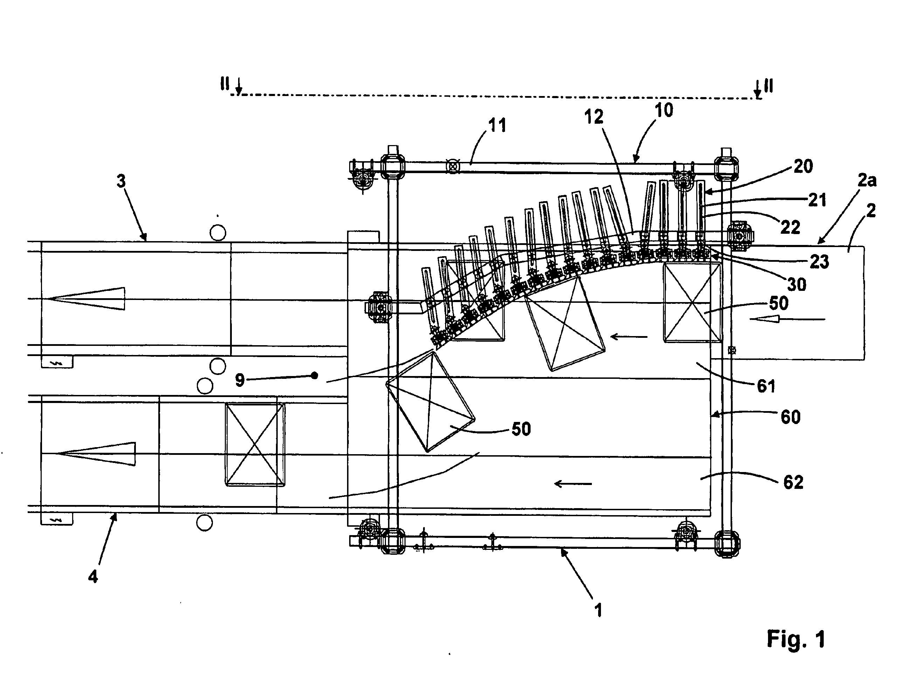

Gemäß Figur 1 ist die insgesamt mit 1 bezeichnete Vorrichtung zum Ausschleusen von Getränkekästen 50 mit einer zuführenden Kastenbahn 2 versehen und zwei abführenden Kastenbahnen 3 und 4.

Die zuführende Kastenbahn 2 liegt achsparallel mit der einen abführenden Kastenbahn 3, wohingegen die andere abführende Kastenbahn 4 seitlich versetzt und auch beabstandet zu der einen abführenden Kastenbahn 3 verläuft.

Die Ausschleusvorrichtung selbst ist mit 10 bezeichnet. Diese Ausschleusvorrichtung 10 umfasst ein Gestell 11, wobei an dem Gestell 11 eine bogenförmig verlaufende Gestellschiene 12 vorgesehen ist. Der Verlauf der bogenförmigen Gestellschiene 12 erstreckt sich von der äußeren Seite 2a der Kastenbahn 2 zu dem Trennraum 9 zwischen den beiden abführenden Kastenbahnen 3,4, wobei der Trennraum auch lediglich ein Schlitz sein kann. Der bogenförmige Verlauf der Gestellschiene 12 muss hierbei nicht durch Biegung der Schiene selbst hergestellt sein, sondern kann beispielsweise auch dadurch erzeugt werden, dass der bogenförmige Verlauf durch einzelne Schienensegmente erfolgt, wobei jedes Segment für sich entlang einer Ebene, also nicht gekrümmt verläuft, wie dies aus Fig. 1 erkennbar ist.

An der Gestellschiene 12 sind die einzelnen insgesamt mit 20 bezeichneten Abweiser angeordnet. Ein solcher Abweiser umfasst einen Arm 21 mit einem Langloch 22, wobei der Arm im Bereich des Langloches mit der Gestellschiene 12, z. B. durch eine Schraube, verbunden ist. Eine genaue Justierung in Bezug auf die Stellung der einzelnen Abweiser 20 an der Gestellschiene 12 erfolgt durch das Langloch 22 im Arm 21 insofern, als die Abweiser hierdurch horizontal verschieblich durch die Gestellschiene 12 aufnehmbar sind.

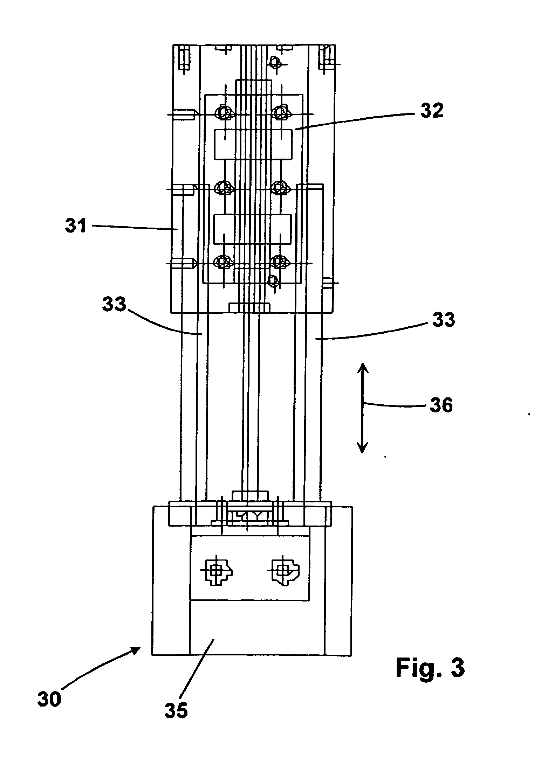

Der Arm 21 besitzt endseitig ein Gelenk 23, an der die eigentliche Abweiseinrichtung 30 um eine vertikale Achse beweglich angeordnet ist. Die schematische Ausbildung der Abweiseinrichtung 30 ergibt sich aus Fig. 3. So ist dort eine Halterung 31 vorgesehen, die den Kolben-Zylinderantrieb 32 aufnimmt. Parallel zum Kolben-Zylinderantrieb 32 sind Führungen 33 vorgesehen, die ebenso wie der Kolben-Zylinderantrieb 32 mit dem Abweisschild 35 verbunden sind. Durch Betätigung des Kolben-Zylinderantriebes 32 ist demzufolge das Abweisschild 35 in Richtung der Pfeile 36 entlang den Führungen 33 verfahrbar.

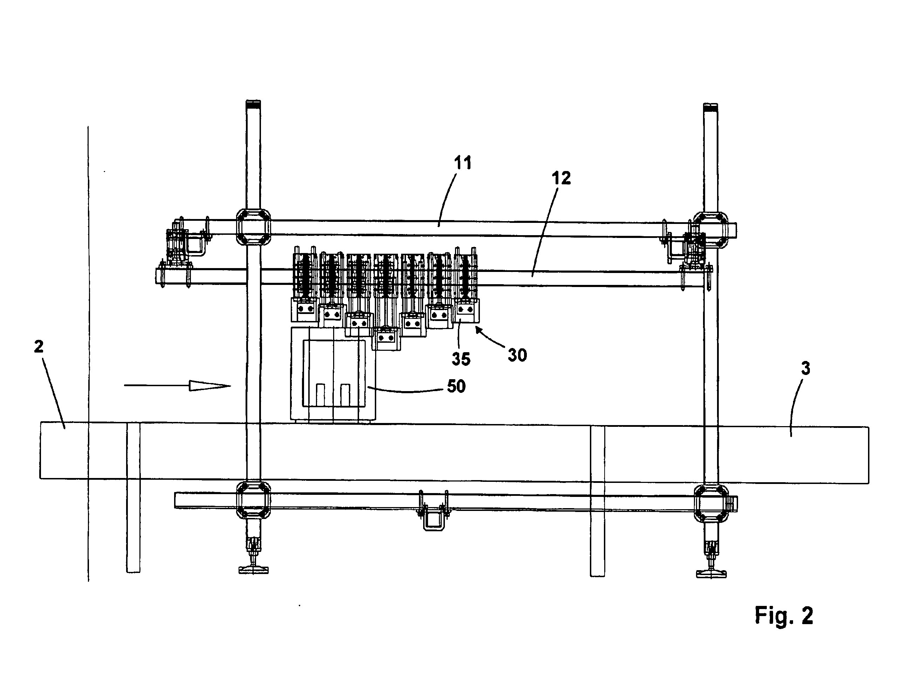

Erkennbar ist aus Fig. 2 der wellenförmige Verlauf der Auslenkung der einzelnen Abweiser in vertikaler Richtung nach unten bei auszuschleusendem Flaschenkasten 50. Wesentlich hierbei ist, dass nur die Abweisschilder der Abweiser in den Weg des Flaschenkastens verfahren werden, die sich unmittelbar vor dem Lauf des Flaschenkastens befinden. In dem Moment, wo der Flaschenkasten die Abweiser passiert hat, befinden sich diese wieder in ihrer eingezogenen oberen Stellung, so dass ein nachfolgender nichtauszuschleusender Flaschenkasten nicht in Kontakt mit den Abweisern kommen kann, aber der auszuschleusende Flaschenkasten ähnlich einem Geländer tatsächlich sanft von der einen Kastenbahn auf die andere Kastenbahn überführt wird.

Hierzu ist im Bereich der Ausschleusvorrichtung 10 ein Ausschleustisch 60 vorgesehen, wobei der Ausschleustisch 60 zwei aneinander anstoßende, nebeneinander angeordnete in gleicher Richtung verlaufende Kastenbahnen 60, 62 umfasst, wobei die Gestellschiene 12 so ausgerichtet ist, dass die von dieser Gestellschiene 12 abgewiesenen Kästen von der einen Kastenbahn 61 des Tisches 60 auf die andere Kastenbahn 62 des Tisches 60 überführt werden. Die Kastenbahn 61 des Tisches schließt unmittelbar an die Zuführende Kastenbahn 2 an, wobei die abführende Kastenbahn 3 die Fortsetzung zu dieser Kastenbahn 61 bildet. Gleiches gilt für die andere abführende Kastenbahn 4, die den Anschluss an die Kastenbahn 62 des Tisches 60 bildet.

## Patentansprüche

1. Vorrichtung zum Ausschleusen von auf einer zuführenden Kastenbahn (2) ankommenden Getränkekästen (50), auf mindestens zwei abgehende Kastenbahnen (3, 4), wobei die Ausschleusvorrichtung (10) ein Gestell (11) umfasst, wobei an dem Gestell (11) mehrere hintereinander angeordnete, einzeln in vertikaler Richtung betätigbare Abweiser (20) mit einem Abweisschild (35) vorgesehen sind, wobei die Abweisschilder (35) nacheinander entsprechend dem Lauf des auszuschleusenden Kastens (50) in vertikaler Richtung in den Weg des Kastens (50) verschieblich sind, um unmittelbar nach Passieren des Kastens (50) wieder in die Ausgangsposition zurückgefahren zu werden,
**dadurch gekennzeichnet, dass** die Ausschleusvorrichtung (10) von der zuführenden Kastenbahn (2) zu mindestens einer abführenden Kastenbahn (4) bogenförmig verläuft.

2. Vorrichtung nach Anspruch 1,
**dadurch gekennzeichnet,**
**dass** die Abweisschilder (35) der Abweiser (20) unmittelbar vor dem ankommenden Kasten (50) in den Weg des auszuschleusenden Kastens (50) verfahrbar sind.

3. Vorrichtung nach Anspruch 1
**dadurch gekennzeichnet,**
**dass** die Abweisschilder (35) von oben nach unten kommend in den Weg des auszuschleusenden Kastens (50) verfahrbar sind.

4. Vorrichtung nach Anspruch 1,
**dadurch gekennzeichnet,**
**dass** der Abweiser (20) einen insbesondere pneumatisch betätigbaren Kolben-Zylinderantrieb (32) aufweist.

5. Vorrichtung nach Anspruch 1
**dadurch gekennzeichnet,**
**dass** die Ausschleusvorrichtung (10) eine bogenförmig verlaufende, über den Kastenbahnen angeordnete Gestellschiene (12) umfasst, an der die einzelnen Abweiser (20) dicht an dicht angeordnet sind.

6. Vorrichtung nach Anspruch 5,
**dadurch gekennzeichnet,**
**dass** der Abweiser (20) einen Arm (21) aufweist, wobei der Arm (21) in horizontaler Richtung verstellbar durch die Gestellschiene (12) aufnehmbar ist.

7. Vorrichtung nach Anspruch 1,
**dadurch gekennzeichnet,**
**dass** die Kastenbahnen (2, 3, 4; 61, 62) als aktive Förder- oder Transportbahnen ausgebildet sind.

8. Vorrichtung nach einem oder mehrerer der voranstehenden Ansprüche,
**dadurch gekennzeichnet,**
**dass** im Bereich der Ausschleusvorrichtung (10) ein zwei Kastenbahnen (61, 62) umfassender Tisch (60) vorgesehen ist.

9. Vorrichtung nach Anspruch 1,
**dadurch gekennzeichnet,**
**dass** sich die zuführende Kastenbahn (2) auf einer Achse mit der einen abgehenden Kastenbahn (3) befindet.

10. Vorrichtung nach Anspruch 9,
**dadurch gekennzeichnet,**
**dass** die andere abgehende Kastenbahn (4) getrennt zu der einen abgehenden Kastenbahn (3) verläuft.

## Claims

1. An apparatus for diverting, on at least two outgoing crate conveying surfaces (3, 4), bottle crates (50) supplied on a feeding crate conveying surface (2), said diverter apparatus (10) including a frame (11), a plurality of deflectors (20) with deflector shield (35), disposed one behind the other and individually actuatable in the vertical direction, being provided on said frame (11), said deflecting shields (35) being adapted to be moved one after the other into the path of the crate (50) that is to be diverted in accordance with the trajectory of said crate (50), and to be returned to their initial position directly after passage of the crate (50),
**characterized in**
**that** the diverter apparatus (10) extends in an arcuate orientation from the feeding crate conveying surface (2) to at least one take-away crate conveying surface (4).

2. The apparatus as set forth in claim 1,
**characterized in**
**that** the deflector shields (35) of the deflectors (20) are movable into the path of the crate (50) to be diverted directly in front of the oncoming crate (50).

3. The apparatus as set forth in claim 1,
**characterized in**
**that** the deflector shields (35) are movable downward from the top into the path of the crate (50) to be diverted.

4. The apparatus as set forth in claim 1,
**characterized in**
**that** the deflector (20) comprises a cylinder-and-piston drive (32) that is more specifically pneumatically actuated.

5. The apparatus as set forth in claim 1,
**characterized in**
**that** the diverter apparatus (10) includes an arcuate frame rail (12) disposed above the crate conveying surface and on which the various deflectors (20) are disposed in close proximity to one another.

6. The apparatus as set forth in claim 5,
**characterized in**
**that** the deflector (20) comprises an arm (21), said arm (21) being receivable by the frame rail (12) in such a manner that it is adjustable in the horizontal direction.

7. The apparatus as set forth in claim 1,
**characterized in**
**that** the crate conveying surfaces (2, 3, 4; 61, 62) are configured to be active conveying or transporting systems.

8. The apparatus as set forth in one or more of the afore mentioned claims,
**characterized in**
**that** a table (60) including two crate conveying surfaces (61, 62) is provided in the region of the diverting apparatus (10).

9. The apparatus as set forth in claim 1,
**characterized in**
**that** the feeding crate conveying surface (2) is coaxial with the one outgoing crate conveying surface (3).

10. The apparatus as set forth in claim 9,
**characterized in**
**that** the other outgoing crate conveying surface (4) is oriented separately from the one outgoing crate conveying surface (3).

## Revendications

1. Dispositif de déviation de caisses de boissons (50) acheminées sur un convoyeur d'amenage des caisses (2), du type destiné à dévier ces caisses sur au moins deux convoyeurs de sortie de caisses (3, 4), ce dispositif de déviation (10) comprenant un cadre (11) sur lequel cadre (11) sont prévus plusieurs déflecteurs (20) avec une plaque déflectrice (35), ces déflecteurs étant disposés les uns derrière les autres et aptes à être actionnés individuellement suivant la direction verticale, les plaques déflectrices (35) étant aptes à être déplacées l'une après l'autre suivant la direction verticale en fonction de la course qu'entreprend la caisse (50) qu'il y a lieu de dévier pour se mettre dans le chemin de la caisse (50) et retourner à leur position de départ immédiatement après le passage de celle-ci (50),
**caractérisé en ce**
**que** le dispositif de déviation (10) présente une courbure depuis le convoyeur d'amenage de caisses (2) jusqu'à l'au moins un convoyeur de sortie de caisses (4).

2. Dispositif selon la revendication 1,
**caractérisé en ce**
**que** les plaques déflectrices (35) des déflecteurs (20) sont aptes à être mises dans le chemin de la caisse (50) qu'il y a lieu de dévier juste avant que celle-ci (50) n'arrive.

3. Dispositif selon la revendication 1, ,
**caractérisé en ce**
**que** les plaques déflectrices (35) sont mobiles du haut vers le bas pour être mises dans le chemin de la caisse (50) qu'il y a lieu de dévier.

4. Dispositif selon la revendication 1,
**caractérisé en ce**
**que** le déflecteur (20) comporte un entraînement à piston et cylindre (32), notamment actionné pneumatiquement.

5. Dispositif selon la revendication 1,
**caractérisé en ce**
**que** le dispositif de déviation (10) comprend un rail (12) de cadre courbe disposé au-dessus des convoyeurs de caisse et sur lequel sont disposés, serrés les uns contre les autres, les différents déflecteurs (20).

6. Dispositif selon la revendication 5,
**caractérisé en ce**
**que** le déflecteur (20) comporte un bras (21), ce bras (21) étant apte à être reçu par le rail (12) du cadre de manière à être ajustable suivant la direction horizontale.

7. Dispositif selon la revendication 1,
**caractérisé en ce**
**que** les convoyeurs de caisse (2, 3, 4 ; 61, 62) sont conformés sous forme de bandes convoyeuses ou transporteuses actives.

8. Dispositif selon une ou plusieurs des revendications précédentes,
**caractérisé en ce**
**qu'**une table (60) comprenant deux convoyeurs de caisses (61, 62) est prévue à la hauteur du dispositif de déviation (10).

9. Dispositif selon la revendication 1,
**caractérisé en ce**
**que** le convoyeur d'amenage de caisses (2) est disposé coaxialement par rapport à l'un des convoyeurs de sortie de caisses (3).

10. Dispositif selon la revendication 9,
**caractérisé en ce**
**que** l'autre des convoyeurs de sortie de caisses (4) est séparé de cet un convoyeur de sortie de caisses (3).
